# EUROPEAN PATENT SPECIFICATION

(11) **EP 3 318 125 B1**
(45) Date of publication and mention of the grant of the patent: **17.07.2019**
(21) Application number: 17199826.3
(22) Date of filing: 03.11.2017
(51) Int. Cl.: A01N 31/16, A01N 45/00, A01P 3/00

(54) **ANTIFUNGAL COMPOSITION**
ANTIFUNGALE ZUSAMMENSETZUNG
COMPOSITION ANTIFONGIQUE

(30) Priority: 04.11.2016 IT 201600111393
(43) Date of publication of application: 09.05.2018
(73) Proprietor: Chemia S.p.A., 44047 Sant'Agostino (FE) (IT)
(72) Inventor: GIBERTI, Andrea, I-44042 CENTO (FE) (IT); FERRARESI, Angelo, I-45046 LENDINARA (RO) (IT); PERINI, Luca, I-44121 FERRARA (FE) (IT)
(74) Representative: Negrini, Elena

(56) References cited:
- WO-A2-2009/114810
- CASSANDRA L. QUAVE ET AL: "Castanea sativa (European Chestnut) Leaf Extracts Rich in Ursene and Oleanene Derivatives Block Staphylococcus aureus Virulence and Pathogenesis without Detectable Resistance", PLOS ONE, vol. 10, no. 8, 21 August 2015 (2015-08-21), page e0136486, XP055364232, DOI: 10.1371/journal.pone.0136486
- NEVENA GRDOVIC ET AL: "The protective effect of a mix of Lactarius deterrimus and Castanea sativa extracts on streptozotocin-induced oxidative stress and pancreatic [beta]-cell death", BRITISH JOURNAL OF NUTRITION, vol. 108, no. 07, 20 December 2011 (2011-12-20), pages 1163-1176, XP055364246, UK ISSN: 0007-1145, DOI: 10.1017/S0007114511006702
- ALBERTO CHIARINI ET AL: "Sweet Chestnut (Castanea sativa Mill.) Bark Extract: Cardiovascular Activity and Myocyte Protection against Oxidative Damage", OXIDATIVE MEDICINE AND CELLULAR LONGEVITY, vol. 2013, 1 January 2013 (2013-01-01), pages 1-10, XP055144897,
- Matteo Micucci: "FROM FOLK[E] MEDICINE TO MEDICINAL CHEMISTRY: STUDY, USING IN VITRO AND CELLULAR ASSAYS, OF RECEPTORS MECHANISMS INVOLVED IN THE ACTIVITIES OF NATURAL COMPOUNDS", Tesi di Dottorato di Ricerca in Scienze Chimiche Ciclo XXIV, 1 January 2012 (2012-01-01), pages 1-119, XP055364535, Bologna, Italy Retrieved from the Internet: URL:http://amsdottorato.unibo.it/4741/1/Ma tteo_Micucci_tesi.pdf [retrieved on 2017-04-13]
- COMANDINI PATRIZIA ET AL: "Tannin analysis of chestnut bark samples (Castanea sativaMill.) by HPLC-DAD", FOOD CHEMISTRY, vol. 157, 12 February 2014 (2014-02-12), pages 290-295, XP028833499, ISSN: 0308-8146, DOI: 10.1016/J.FOODCHEM.2014.02.003
- PENG S ET AL: "Insoluble ellagitannins in Castanea sativa and Quercus petraea woods", PHYTOCHEMISTRY, PERGAMON PRESS, GB, vol. 30, no. 3, 1 January 1991 (1991-01-01), pages 775-778, XP026632235, ISSN: 0031-9422, DOI: 10.1016/0031-9422(91)85250-4 [retrieved on 1991-01-01]
- TANG H R ET AL: "STUDIES OF VEGETABLE TANNINS. COMPLETE STRUCTURAL DETERMINATION OF TWO CHESTNUT TANNINS-VESCALAGIN AND CASTALAGIN USING NUCLEAR MAGNETIC RESONANCE SPECTROSCOPIC METHODS", JOURNAL OF THE SOCIETY OF LEATHER TECHNOLOGISTS AND CHEMISTS, SOCIETY OF LEATHER TECHNOLOGISTS AND CHEMISTS, GB, vol. 79, 1 January 1995 (1995-01-01), pages 181-187, XP008054822, ISSN: 0144-0322
- LILLIAN BARROS ET AL: "Characterization of phenolic compounds in wild medicinal flowers from Portugal by HPLC-DAD-ESI/MS and evaluation of antifungal properties", INDUSTRIAL CROPS AND PRODUCTS., vol. 44, 1 January 2013 (2013-01-01), pages 104-110, XP055364252, NL ISSN: 0926-6690, DOI: 10.1016/j.indcrop.2012.11.003
- Lidia Lipinska ET AL: "STRUCTURE, OCCURRENCE AND BIOLOGICAL ACTIVITY OF ELLAGITANNINS: A GENERAL REVIEW", Acta Sci. Pol., Technol. Aliment., 1 January 2014 (2014-01-01), pages 289-299, XP055364251, Retrieved from the Internet: URL:http://www.food.actapol.net/pub/7_3_20 14.pdf [retrieved on 2017-04-12]
- MIRIAN UEDA YAMAGUCHI ET AL: "Antifungal effects of Ellagitannin isolated from leaves of(Lauraceae)", ANTONIE VAN LEEUWENHOEK, KLUWER ACADEMIC PUBLISHERS, DO, vol. 99, no. 3, 5 October 2010 (2010-10-05), pages 507-514, XP019882423, ISSN: 1572-9699, DOI: 10.1007/S10482-010-9516-3
- JUAN ASCACIO-VALDÉS ET AL: "Antifungal ellagitannin isolated from Euphorbia antisyphilitica Zucc", ASIAN PACIFIC JOURNAL OF TROPICAL BIOMEDICINE, vol. 3, no. 1, 1 January 2013 (2013-01-01) , pages 41-46, XP055364258, China ISSN: 2221-1691, DOI: 10.1016/S2221-1691(13)60021-0
- .: "Stop Fitan", , 12 April 2017 (2017-04-12), page 1, XP055364507, Italy Retrieved from the Internet: URL:http://www.starbene.it/parafarmaci/sto p-fitan-12cps-922364450 [retrieved on 2017-04-12]
- DATABASE WPI Week 201429 Thomson Scientific, London, GB; AN 2014-H17141 XP002776781, & CN 103 610 212 A (BEIJING AGRIC COLLEGE) 5 March 2014 (2014-03-05)
- FENG H ET AL: "Hydrolysable tannins and related compounds from Castanea mollissima", PHYTOCHEMISTRY, PERGAMON PRESS, GB, vol. 27, no. 4, 1 January 1988 (1988-01-01), pages 1185-1189, XP026633833, ISSN: 0031-9422, DOI: 10.1016/0031-9422(88)80299-1 [retrieved on 1988-01-01]
- .: "Nemafert L", Nutriland Catalogo 2017, 15 December 2016 (2016-12-15), pages 39-39, XP055364591, Ferrara, Italy Retrieved from the Internet: URL:http://www.chemia.it/UserFiles/File/nu triland2017.pdf [retrieved on 2017-04-13]

## Description

The present invention relates to the technical field concerning the control of peronospora and oidium. Said antifungal composition is particularly recommended for fighting diseases caused by: Plasmopara viticola, Phytophthora infestans, Bremia latucae, Pseudoperonospora cubensis, Peronospora destructor, Podosphaera xantii, Golovinomyces fuliginea, Erysiphe polyphaga, Erysiphe oronti, Spheraerotheca fuliginea, Leveillula taurica, Oidium lycopersicum, Erysiphe sp, Botritys cinerea, Venturia inaequalis, Antrachnose of grapes, Phomopsis sp., Podosphaera leucotricha, Oidium farinosum, Uncinula necator, grape black rot and Pseudomonas syringae in the cultivation of actinidia, in crops in general, in horticultural, fruit and agricultural crops in general, in vegetable and garden plants and in agricultural soils.

Said antifungal composition may be used in the field of agriculture, in the hobby industry, in vegetable plants, in gardens, in nurseries, and, in general, in any place where there may be the development of a plant disease caused by protists belonging not only to the *Peronospora* genus, but also to other genera both in the family Peronosporaceae and in the family Pythiaceae and Oidium sp.

In particular, it relates to an antifungal composition obtained from a natural chestnut extract based on water-extracted hydrolysed ellagitannins.

There are many known substances and formulations having antifungal action, mainly based on synthetic chemicals, such as strobilurins, dithiocarbamates or copper salts. Synthetic chemical-based products are toxic, dangerous and environmentally polluting; copper salt-based products have the drawback that they bring into the soil high amounts of polluting copper metal; furthermore, they bring high amounts of copper, which may cause "burns" and phytotoxicity in the treated plants.

The following prior literature documents:
- Cassandra L. Quave ET AL: "Castanea sativa (European Chestnut) Leaf Extracts Rich in Ursene and Oleanene Derivatives Block Staphylococcus aureus Virulence and Pathogenesis without Detectable Resistance", PLOS ONE, vol. 10, no. 8, 21 August 2015 (2015-08-21), page e0136486, XP55364232, DOl: 10.1371/journal.pone.0136486;
- Nevena Grdovic ET AL: "The protective effect of a mix of Lactarius deterrimus and Castanea sativa extracts on streptozotocin-induced oxidative stress and pancreatic [beta]-cell death", British Journal of Nutrition, vol. 108, no. 07, 20 December 2011 (2011-12-20), pages 1163-1176, XP55364246, UK, ISSN: 0007-1145, DOl: 10.1017/S0007114511006702;
- Alberto Chiarini ET AL: "Sweet Chestnut (Castanea sativa Mill.) Bark Extract: Cardiovascular Activity and Myocyte Protection against Oxidative Damage", Oxidative Medicine and Cellular Longevity, vol. 2013, 1 January 2013 (2013-01-01), pages 1-10, XP55144897;
- Matteo Micucci: "From folk[e] medicine to medicinal chemistry: Study, using in vitro and cellular assays, of receptors mechanisms involved in the activities of natural compounds", Tesi di Dottorato di Ricerca in Scienze Chimiche Ciclo XXIV, 1 January 2012 (2012-01-01), pages 1-119, XP55364535, Bologna, Italy, Retrieved from the Internet: URL:http://amsdottorato.unibo.it/4741/1/Matteo_Micucci_tesi.pdf [retrieved on 2017-04-13]
- COMANDINI PATRIZIA ET AL: "Tannin analysis of chestnut bark samples (Castanea sativaMill.) by HPLC-DAD", FOOD CHEMISTRY, vol. 157, pages 290-295, XP028833499, ISSN: 0308-8146, DOl: 10.1016/ J.FOODCHEM.2014.02.003;
- PENG S ET AL: "Insoluble ellagitannins in Castanea sativa and Quercus petraea woods", PHYTOCHEMISTRY, PERGAMON PRESS, GB, vol. 30, no. 3,1 January 1991 (1991-01-01), pages 775-778, XP026632235, ISSN:0031-9422, DOl: 10.1 016/0031-9422(91)85250-4;
- TANG H R ET AL: "Studies of vegetable tannins. Complete structural determination of two chestnut tannins- vescalagin and castalagin using nuclear magnetic resonance spectroscopic methods", Journal of the society of leather technologists and chemists, GB, vol. 79, 1 January 1995 (1995-01-01), pages 181-187, XP008054822, ISSN: 0144-0322;
- WO 2009/114810 A2 (FLORIDA INTERNAT UINVERSITY BO [US]; MATHEE KALAI [US]; ADONIZIO ALLIS) 17 September 2009 (2009-09-17);
- Lillian Barros ET AL: "Characterization of phenolic compounds in wild medicinal flowers from Portugal by HPLC-DAD-ESI/MS and evaluation of antifungal properties", INDUSTRIAL CROPS AND PRODUCTS., vol. 44, 1 January 2013 (2013-01-01), pages 104-110, XP55364252, NL, ISSN: 0926-6690, DOl: 10.1016/j.indcrop.2012.11.003;
- DATABASE WPI Week 201429 Thomson Scientific, London, GB; AN 2014-H17141, XP002776781; & CN 103 610 212 A (BEIJING AGRIC COLLEGE) 5 March 2014; disclose compositions comprising tannin extract from Castanea Sativa Miller containing polyphenols from the ellagitannin family.
The main object of the present invention is to provide an antifungal composition based on water-extracted plant tannins. Said formulation turns out to be stable in a completely water-soluble powder formulation, free of any chemical residues. In addition to fighting Peronospora, the formulation brings several well-known effects and benefits arising from the application of tannings in the agricultural industry, e.g., it improves crop yield and quality, promotes plants' resistance to biotic and abiotic stress, improves the efficiency of plant protection agents and fertilisers, is a natural source of soluble organic carbon, enables pH correction in plants and soils, acts on the nitrogen cycle and improves plant nitrogen recovery, and reduces the need for chemical composts, does not pollute soil, water and ecosystem.
This innovative product is for use, both domestic and civil, on plants and soils, as an antifungal, antimildew, anti-peronospora, green corrective, strengthening composition in vegetable garden plants, meadows, gardens and nurseries.
Tannins are the product of plant secondary metabolism, and consist of water-soluble molecules having different molecular weights; they have been classified for the first time by Freudenberg, in 1922, based on their structural features as follows.
- Hydrolysable tannins: defined in this way because they hydrolyse into glucose and into ellagic or gallic acid in the presence of strong acids. Thus, there are gallotannins and ellagitannins. The former are extracted from galls (*Quercus inifectoria* and *Rhus semialata*), from sumac fruits (*Rhus coriaria*) and from tara (*Caesalpinia spinosa*). Ellagitannins, instead, are present in oak wood (*Quercus robur, Quercus petraea* and *Quercus alba*), in chestnut wood (*Castanea sativa*) and in cherry plum wood (*Terminalia chebula*).
- Condensed tannins: they have a reduced astringent power and are further divided into proanthocyanidins and profisetinidins. Tannins that are naturally present in grapes are the proanthocyanidin ones, which comprise different flavonoid molecules that release anthocyanins and other insoluble compounds, when subjected to acid hydrolysis. They are mainly present in the skins and seeds of grapes, and therefore you can find them in red wines. Instead, profisetinidin tannins are extracted from quebracho wood (*Schinopsis lorentzii*) and mimosa (*Acacia mollissima*).

The tannins in the present patent are Hydrolysable Tannins, i.e., high molecular weight substances mainly consisting of water-soluble polyphenols having protein precipitation capacity as their main chemical prerogative. They are plant extracts from *Castanea Sativa Miller* containing polyphenols from the ellagitannin family.

The method of extracting hydrolysable tannins from the bark of *Castanea Sativa Miller* and, in general, from those plants containing them, is known in the art, and is not an object of the present patent.

This specific water-soluble powder formulation allows the active ingredients contained in the plant extract to be readily active and to act in synergy in the fight against peronospora.

The antifungal composition product of the present invention may include a non-ionic surfactant selected from polyoxyethylated alkylphenols, dioctylsulphosuccinates, alkylphenols, polyoxyethylated sorbitan monoesters, sorbitan monooleates, polyoxyethylated fats or aryl-alkyl alcohols, fatty acids and esters of fatty acids.

The antifungal composition product of the present invention may include an anionic emulsifier selected from alkylsulfonates, alkyl-aryl and aryl sulphates, phosphates, amine salts of alkyl phosphates, sulphosuccinates, polycarboxylates.

The antifungal composition of the present invention may include a cationic emulsifier selected from quaternary ammonium salts and primary, secondary and tertiary amine salts, amphoteric emulsifiers in their zwitterionic or mono ionic forms.

The antifungal composition of the present invention may include inerts such as sands, zeolites, clays, sepiolites, carbonates, gypsa, kaolins, flours obtained by grinding cereals or any part of the plants.

The antifungal composition of the present invention may include other products such as extracts of algae and alginates, extracts of basic amino acids in the L or R or racemic form; peptides of animal or vegetable origin, humic acids, fulvic acids, extracts from leonardite; molecules such as: N-acetyl-L-thiazolidin-4-carboxylic acid, macro nutrients and/or micro elements such as: Nitrogen, Phosphorus, Potassium, Calcium, Magnesium, Sodium and Sulphur, Iron, Manganese, Zinc, Aluminium, Boron, Chromium, Cobalt, Copper, Iodine and Molybdenum, in any chemical form, alone or in combination with each other and in quantities that are variable and suitable to the particular need of the plant, of the crop or ground.

The antifungal composition includes or may include acidifying agents, pH regulators, antioxidants, bactericides, anti-fermenting agents, to improve the chemical stability of the formulation.

### EXAMPLE 1 (not according to the invention)

According to a formulation (F1), the antifungal composition includes the components as shown in Table 1. The amount of each component is expressed as a weight/weight percentage:

| **No.** | **Table 1** | **Amount** |
|---|---|---|
| | **Component** | in weight/weig ht % |
| 1 | TANNIN EXTRACT | 100.0 |
| | *Castanea Sativa Miller* containing polyphenols from the ellagitannin family. | |
| | *Features:* | |
| | *Ellagitannin contents on dry matter basis Minimum 75 %* | |
| | *Maximum Humidity 8 %* | |
| | *pH (sol. 10 %*) *3.20* - *3.80* | |
| | *Ashes Max. 1.80 %* | |

For the preparation of this first formulation for use, the following operations are carried out:
- Dissolve the product in water by gently stirring, at a dose of 300-700 grams/hectolitre (corresponding to a concentration of 0.3-0.7%), depending on the intensity of the infection.
- The mixture thus obtained is sprayed on the leaves and on every part of the infested plant by means of usual atomisers for professional or hobby use. Its use may be both preventive (prior to the fungus infection) and in the presence of the mold caused by the parasite.

### EXAMPLE 2

In a second formulation (F2), the antifungal composition differs from the one of the first formulation (F1) in that it includes the components as shown in Table 2. The amount of each component is expressed as a weight/weight percentage:

| **No.** | **Table 2** | **Amount** |
|---|---|---|
| | **Component** | in weight/weight % |
| 1 | TANNIN EXTRACT | 87.2 |
| | *Castanea Sativa Miller* containing polyphenols from the ellagitannin family. | |
| | *Features:* | |
| | *Ellagitannin contents on dry matter basis Minimum 75 %* | |
| | *Maximum Humidity 8 %* | |
| | *pH (sol. 10 %*) *3.20* - *3.80* | |
| | *Ashes Maximum 1.80 %* | |
| 2 | Mn SO4 * H2O | 1.5 |
| | Manganese Sulfate Monohydrate | |
| | *(CAS Number 10034-96-5)* | |
| 3 | Zinc Oxide 99% | 5.3 |
| | *(CAS Number 1314-13-2)* | |
| 4 | Citric Acid | 6.0 |
| | (CAS Number 77-92-9) | |

The method for obtaining the second formulation (F2) of the antifungal composition is as follows:
- Add the components in the order as reported in the table and accurately mix them by means of a specific powder mixer.

For the preparation of this formulation for use, the following operations are carried out:
- Dissolve the product in water by gently stirring, at a dose of 300-700 grams/hectolitre (corresponding to a concentration of 0.3-0.7%), depending on the intensity of the infection.

The mixture thus obtained is sprayed on the leaves and on every part of the infested plant by means of usual atomisers for professional or hobby use. Its use may be both preventive (prior to the fungus infection) and in the presence of the mold caused by the parasite.

### EXAMPLE 3

In a third formulation (F3), the antifungal composition differs from the one of the second formulation (F2) in that it includes the components as shown in Table 3. The amount of each component is expressed as a weight/weight percentage:

| **No.** | **Table 3** | **Amount** |
|---|---|---|
| | **Components** | in weight/weight % |
| 1 | TANNIN EXTRACT | 87.2 |
| | *Castanea Sativa Miller* containing polyphenols from the ellagitannin family. | |
| | *Features:* | |
| | *Ellagitannin contents on dry matter basis Minimum 75 %* | |
| | *Maximum Humidity 8 %* | |
| | *pH (sol. 10 %*) *3.20* - *3.80* | |
| | *Ashes Maximum 1.80 %* | |
| 2 | Chitosan | 5.0 |
| | *(CAS Number 9012-76-4)* | |
| 3 | Citric Acid | 7.8 |
| | (CAS Number 77-92-9) | |

The method for obtaining the antifungal composition is as follows:
- Add the components in the order as reported in the table and accurately mix them by means of a specific powder mixer.

For the preparation of this formulation for use, the following operations are carried out:
- Dissolve the product in water by gently stirring, at a dose of 300-700 grams/hectolitre (corresponding to a concentration of 0.3-0.7%) depending on the intensity of the infection.
- The mixture thus obtained is sprayed on the leaves and on every part of the infested plant by means of usual atomisers for professional or hobby use. Its use may be both preventive (prior to the fungus infection) and in the presence of the mold caused by the parasite.

The formulations (F1), (F2) and (F3) may also be dissolved in water or dispersed in an organic solvent to obtain: in the first case, a solution of tannins dissolved in water (F1) comprising or not comprising inorganic salts and/or Chitosan (F2) and (F3). In the second case, a suspension in an organic solvent (F1), (F2) and (F3) which may be an alcohol, a naphtha, a vegetable oil, a mineral oil.

The formulations (F1), (F2) and (F3) were tested by means of the official control tests according to the Manual on development and use of FAO and WHO specifications for pesticides. The tests carried out were the following: test on active ingredient contents, test on humidity contents by analysing the weight loss in a stove at 54°C, sieving and heat and cold accelerated aging test. The positive results of the above-listed tests proved the stability of the formulation.

Moreover, the product of the present invention has been tested on grapevines, Cucurbitaceae, Solanaceae and Pomaceae plants, roses and turfs as well as on lettuce plants, to prove the astonishing preventive and, above all, curative efficacy thereof as an anti-peronospora and antimildew agent.

The results are very surprising, as only 24 hours after the treatment, the product exhibits an extraordinary curative and eradicative activity corresponding to the total, complete desiccation of the fungus, thus obtaining a 100% positive effect in all plants treated. Surprisingly, the combination of features of the composition exerts a plant growth effect, i.e., a yield increase effect unexpectedly much greater than those provided by the same crop without treatment.

A further advantage of the antifungal composition product of the present invention as formulated into a single soluble powder formulation is that it may comprise synergy between active ingredients (one inorganic and the other organic, or both organic), increased safety for operators (as it is completely non-toxic) and a lower environmental impact as there are no polluting or toxic chemicals of any kind.

Advantageously, the product subject-matter of the present invention may be used in every part of a plant to increase its vigour and the development of fruits and leaves, i.e., in all physical parts thereof, including seeds, seedlings, flowers, saplings, roots, bulbs, shanks, stems, in agriculture, in fruit-growing, in wine-growing, in horticulture, in silviculture, in aquaculture, in the open field and in greenhouses, in the nursery industry in the garden industry and in the hobby industry.

## Claims

1. Antifungal composition comprising tannin extract from *Castanea Sativa Miller* containing polyphenols from the ellagitannin family and **characterized in** comprising at least one of:
- Chitosan (CAS Number 9012-76-4);
- Citric Acid (CAS Number 77-92-9);
where said composition is assigned to be used on crops infested for providing an at least anti-Peronospora and/or antimildew action.

2. Composition according to claim 1 **characterized in that** the *Chitosan* (CAS 9012-76-4) weight/weight concentration ranges from 0.01% to 80%.

3. Composition according to claim 1 or 2 **characterized in that** the Citric Acid (CAS Number 77-92-9) weight/weight concentration ranges from 0.01% to 80%.

4. Composition according to any one of the preceding claims **characterized in that** it is in one of the following forms: powder, granular, microgranular or liquid dissolved in water or in an organic solvent which may be alcohol, naphtha, a vegetable oil, a mineral oil.

5. Composition according to any one of the preceding claims **characterized in that** it is used after dilution in water at a concentration ranging from 0.01% to 80%.

6. Composition according to any of the previous claims **characterized in that** it comprises at least one among inert and/or other absorbents such as zeolites, sands, clays, sepiolites, carbonates, sodium alginates, potassium and ammonium, gypsum, kaolin, diatomaceous earth flour, oyster or clam shell flour, talc, titanium oxide, aluminium silicates, mica, lithopone, white lead, starches, carbon black, vegetable or mineral coal, urea, urea formaldehyde, sugars, cellulose polymers, celites, flours obtained by grinding cereals or any part of the plant and/or comprises at least one among herbicides, fungicides, insecticides, acaricides, nematicides, natural or chemical synthesis biostimulants.

7. Composition according to any of the preceding claims **characterized in that** it may include extracts of algae and alginates, extracts of basic amino acids in the L or R or racemic form, N-acetyl-L-thiazolidin-4-carboxylic acid, peptides of animal or vegetable origin, humic acids, fulvic acids, extracts from leonardite, macro nutrients and/or micro elements such as: Nitrogen, Phosphorus, Potassium, Calcium, Magnesium, Sodium and Sulphur, Iron, Manganese, Zinc, Aluminium, Boron, Chromium, Cobalt, Copper, Iodine and Molybdenum, in any chemical form, alone or in combination with each other and in quantities that are variable and suitable to the particular need of the plant, of the crop or ground.

8. Composition according to any of the preceding claims **characterized in that** it comprises at least one among:
- Non-ionic surfactants such as alkylphenols, polyoxyethylate, dioctylsulphosuccinates, alkylphenols, monoesters, polyoxyethylenated sorbitan, sorbitan monooleate, polyoxyethylenated fats or aryl-alkyl alcohols, fatty acids and esters of fatty acids;
- Anionic emulsifiers such as alkylsulfonates, alkyl-aryl and aryl sulphates, phosphates, amine salts of alkyl phosphates, sulphosuccinates, polycarboxylates;
- Cationic emulsifiers such as quaternary ammonium salts and primary, secondary and tertiary amine salts, amphoteric emulsifiers in their zwitterionic or mono ionic forms;
- Acidifying agents, pH regulators, antioxidants, bactericides, anti-fermenting agents.

9. Use of the composition of any of the preceding claims for the fight against the Peronosporaceae and powdery mildews on agricultural, nursery, horticultural, floral and similar crops infested by at least one of these last two pathogens.

## Patentansprüche

1. Antimykotische Zusammensetzung aufweisend Tanninextrakt aus der *Castanea Sativa Miller* (Miller-Edelkastanie), die Polyphenole aus der Ellagitannin-Familie enthält und **dadurch gekennzeichnet, dass** sie mindestens eines der folgenden aufweist:
- Chitosan (CAS-Nummer 9012-76-4);
- Zitronensäure (CAS-Nummer 77-92-9);
wobei die Zusammensetzung dazu vorgesehen ist, auf befallenen Kulturpflanzen angewendet zu werden, um eine zumindest Anti-Peronospora- und/oder eine Anti-Mehltau-Wirkung bereitzustellen.

2. Zusammensetzung gemäß Anspruch 1, **dadurch gekennzeichnet, dass** die *Chitosan-*(*CAS* 9012-76-4)-Gewichtskonzentration im Bereich von 0,01 % bis 80 % liegt.

3. Zusammensetzung gemäß Anspruch 1 oder 2, **dadurch gekennzeichnet, dass** die Zitronensäuren-(CAS-Nummer 77-92-9)-Gewichtskonzentration im Bereich von 0,01 % bis 80 % liegt.

4. Zusammensetzung gemäß einem der vorhergehenden Ansprüche, **dadurch gekennzeichnet, dass** sie eine der folgenden Formen aufweist: Pulver, Granulat, Mikrogranulat oder eine in Wasser oder einem organischen Lösungsmittel aufgelöste Flüssigkeit, wobei das organische Lösungsmittel Alkohol, Rohbenzin, ein Pflanzenöl oder ein Mineralöl sein kann.

5. Zusammensetzung gemäß einem der vorhergehenden Ansprüche, **dadurch gekennzeichnet, dass** sie nach dem Verdünnen in Wasser mit einer Konzentration im Bereich von 0,01 % bis 80 % verwendet wird.

6. Zusammensetzung gemäß einem der vorhergehenden Ansprüche **dadurch gekennzeichnet, dass** sie zumindest eines aus inerten und/oder anderen Absorptionsmitteln aufweist, wie z.B. Zeolithe, Sand, Tone, Sepiolithe, Karbonate, Natriumalginate, Kalium und Ammonium, Gips, Kaolin, Diatomeenerdenmehl/Mehl aus Kieselerde, Austern- oder Muschelschalenmehl, Talk, Titanoxid, Aluminiumsilikate, Glimmer, Lithopon, Bleiweiß, Speisestärke, Ruß, Pflanzen- oder Steinkohle, Harnstoff, Harnstoffformaldehyd, Zucker, Zellstoffpolymere, Celite, aus gemahlenen Zerealien oder anderen Pflanzenteilen gewonnenes Mehl; und/oder dass es mindestens eines der folgenden aufweist: Herbizide, Fungizide, Insektizide, Akarizide, Nematizide oder natürliche oder chemische Synthese-Biostimulatoren.

7. Zusammensetzung gemäß einem der vorhergehenden Ansprüche, **dadurch gekennzeichnet, dass** sie umfassen kann: Extrakte aus Algen und Alginaten, Extrakte aus basischen Aminosäuren in der L- oder R- oder racemischen Form, N-Acetyl-L-Thiazolidin-4-Carbonsäure, Peptide tierischen oder pflanzlichen Ursprungs, Huminsäuren, Fulvinsäuren, Extrakte aus Leonardit, Makro-Nährstoffe und/oder Mikroelemente wie beispielsweise: Stickstoff, Phosphat, Kalium, Kalzium, Magnesium, Natrium und Schwefel, Eisen, Mangan, Zink, Aluminium, Boron, Chrom, Kobalt, Kupfer, Jod und Molybdän, in jeder chemischen Form, alleine oder in Kombination miteinander, und in Mengen, die variabel und für die speziellen Bedürfnisse der Pflanze, der Kulturpflanze oder des Bodens geeignet sind.

8. Zusammensetzung gemäß einem der vorhergehenden Ansprüche, **dadurch gekennzeichnet, dass** es zumindest eines der folgenden aufweist:
- nicht-ionische Tenside wie z.B. Alkylphenole, Polyoxyethylen, Natriumdioctylsulfosuccinate, Alkylphenole, Monoester, Polyoxyethylensorbitan, Sorbitanmonooleat, Polyoxyethylenfette oder Arylalkylalkohole, Fettsäuren oder Ester aus Fettsäuren;
- anionische Emulgatoren wie z.B. Alkylsulfonate, Alkylaryl- und Arylsulfate, Phosphate, Aminsalze aus Alkylphosphaten, Sulfosuccinate, Polycarboxylate;
- kationische Emulgatoren wie quartäre Ammoniumsalze und primäre, sekundäre und tertiäre Aminsalze, amphotere Emulgatoren in ihren zwitterionischen oder monoionischen Formen;
- Säuerungsmittel, pH-Regulatoren, Antioxidantien, Bakterizide, Anti-Fermentierungs-Mittel.

9. Anwendung der Zusammensetzung gemäß einem der vorhergehenden Ansprüche zum Kampf gegen Peronospora und echten Mehltau auf Landwirtschafts-, Pflanzenschul-, Gartenbau-, Blumen- oder ähnlichen Kulturpflanzen, die von mindestens einem dieser beiden Erreger befallen sind.

## Revendications

1. Composition antifongique comprenant un extrait de tanin obtenu à partir de *Castanea Sativa Miller* contenant des polyphénols de la famille des ellagitanins et **caractérisée par le fait qu'**elle comprend au moins l'un parmi :
- le chitosan (numéro de CAS 9012-76-4) ;
- l'acide citrique (numéro de CAS 77-92-9) ;
ladite composition étant destinée à être utilisée sur des cultures infestées pour fournir une action au moins anti-Peronospora et/ou anti-mildiou.

2. Composition selon la revendication 1, **caractérisée par le fait que** la concentration en poids/poids de *Chitosan* (CAS 9012-76-4) se situe dans la plage de 0,01 % à 80 %.

3. Composition selon l'une des revendications 1 ou 2, **caractérisée par le fait que** la concentration en poids/poids d'acide citrique (CAS numéro 77-92-9) se situe dans la plage de 0,01 % à 80 %.

4. Composition selon l'une quelconque des revendications précédentes, **caractérisée par le fait qu'**elle se présente dans l'une des formes suivantes : poudre, granulaire, microgranulaire ou liquide dissoute dans l'eau ou dans un solvant organique qui peut être un alcool, un naphta, une huile végétale, une huile minérale.

5. Composition selon l'une quelconque des revendications précédentes, **caractérisée par le fait qu'**elle est utilisée après dilution dans l'eau à une concentration se situant dans la plage de 0,01 % à 80 %.

6. Composition selon l'une quelconque des revendications précédentes, **caractérisée par le fait qu'**elle comprend au moins l'un parmi les absorbants inertes et/ou autres absorbants tels que les zéolites, les sables, les argiles, les sépiolites, les carbonates, les alginates de sodium, le potassium et l'ammonium, le gypse, le kaolin, la farine de terre à diatomées, la farine de coquille d'huîtres ou de coquillages, le talc, l'oxyde de titane, les silicates d'aluminium, le mica, le lithopone, la céruse, les amidons, le noir de carbone, le charbon végétal ou minéral, l'urée, l'urée formaldéhyde, les sucres, les polymères de cellulose, les célites, les farines obtenues par broyage de céréales ou de toute partie de la plante et/ou qu'elle comprend au moins l'un parmi les herbicides, les fongicides, les insecticides, les acaricides, les nématicides, les biostimulants naturels ou de synthèse chimique.

7. Composition selon l'une quelconque des revendications précédentes, **caractérisée par le fait qu'**elle peut comprendre des extraits d'algues et des alginates, des extraits d'acides aminés basiques dans la forme L ou R ou racémique, de l'acide N-acétyl-L-thiazolidine-4-carboxylique, des peptides d'origine animale ou végétale, des acides humiques, des acides fulviques, des extraits de léonardite, des macro nutriments et/ou des micro éléments tels que: l'Azote, le Phosphore, le Potassium, le Calcium, le Magnésium, le Sodium et le Soufre, le Fer, le Manganèse, le Zinc, l'Aluminium, le Bore, le Chrome, le Cobalt, le Cuivre, l'Iode et le Molybdène, dans toute forme chimique, individuellement ou en combinaison l'un avec l'autre et dans des quantités qui sont variables et appropriées au besoin particulier de la plante, de la culture ou du sol.

8. Composition selon l'une quelconque des revendications précédentes, **caractérisée par le fait qu'**elle comprend au moins l'un parmi :
- les tensio-actifs non ioniques, tels que les alkylphénols, le polyoxyéthylate, les dioctylsulfosuccinates, les alkylphénols, les monoesters, le sorbitan polyoxyéthyléné, le monooléate de sorbitan, les graisses polyoxyéthylénées ou les aryl-alkyl alcools, les acides gras et les esters d'acides gras ;
- les émulsifiants anioniques, tels que les alkylsulfonates, les alkyl-aryl et aryl sulfates, les phosphates, les sels d'amine d'alkyl phosphates, les sulfosuccinates, les polycarboxylates ;
- les émulsifiants cationiques, tels que les sels d'ammonium quaternaire et les sels d'amines primaires, secondaires et tertiaires, les émulsifiants amphotères dans leurs formes zwittérioniques ou mono ioniques ;
- les agents acidifiants, les régulateurs de pH, les anti-oxydants, les bactéricides, les agents anti-fermentation.

9. Utilisation de la composition selon l'une quelconque des revendications précédentes pour la lutte contre les Peronosporaceae et les mildious pulvérulents sur les cultures agricoles, de pépinières, horticoles, florales et similaires, infestées par au moins l'un de ces deux derniers pathogènes.
